# EUROPEAN PATENT SPECIFICATION

(11) **EP 2 087 822 B1**
(45) Date of publication and mention of the grant of the patent: **06.03.2019**
(21) Application number: 06841736.9
(22) Date of filing: 13.12.2006
(51) Int. Cl.: A47K 1/09, A47K 5/18, B65D 51/24, G04F 1/04, G04B 47/00, G04F 1/06, G09B 19/00

(54) **CONTAINER INTENDED FOR DENTAL HYGIENE AND OTHER USES AND USE METHOD THEREOF**
FÜR DIE ZAHNHYGIENE UND ANDERE VERWENDUNGEN BESTIMMTER BEHÄLTER UND VERWENDUNGSVERFAHREN DAFÜR
RÉCIPIENT À UTILISER DANS LE CADRE DE L'HYGIÈNE DENTAIRE ET À D'AUTRES FINS, ET PROCÉDÉ D'UTILISATION

(30) Priority: 08.11.2006 ES 200602835
(43) Date of publication of application: 12.08.2009
(73) Proprietor: Cartay Productos de Acogida SL, 28830 San Fernando de Henares (ES)
(72) Inventor: SAIZ DE SOTO, Jose Ramón, 28033 Madrid (ES); LÁZARO GONZÁLEZ DE LA PEÑA, María del Pilar, 28033 Madrid (ES); PARK, Douglas, Seoul 133-040 (KR)
(74) Representative: Ungria López, Javier
(86) International application number: PCT/ES2006/000684
(87) International publication number: WO 2008/056004

(56) References cited:
- EP-A2- 0 032 869
- DE-A1- 3 246 048
- DE-U1- 8 912 514
- FR-A- 697 947
- GB-A- 2 242 040
- US-A- 1 833 205
- US-A- 1 973 390
- US-A- 4 836 415
- US-A- 5 570 325
- US-A1- 2004 050 733
- US-B1- 6 345 015

## Description

### OBJECT OF THE INVENTION

As stated in the title of this descriptive specification, the present invention relates to a container intended for dental hygiene and other uses, and method of use, whose essential aim is to provide a container with a timer applicable to various uses, one of them being that of dental hygiene, for which this invention also provides a specific method of use which facilitates the brushing of teeth more correctly than is usual, along with a notable saving in water. Nevertheless, other different applications are not discarded in which a container provided with a timer is required.

### BACKGROUND OF THE INVENTION

Various containers or cases are known which permit elements of dental hygiene, such as toothpaste tube and toothbrush, to be housed. These known containers or cases are limited to housing the elements of dental hygiene, preferably for traveling, or for having the elements of dental hygiene more conveniently housed and stored.

EP 0 032 869 A2 describes a portable container for toothbrush and toothpaste, which also works as a musical box, once the toothbrush is extracted from the container.

FR 697 947 describes a portable container for toothbrush and toothpaste also having a glass and a lid. No timer is included.

US 1 833 205 describes a portable container for toothbrush and toothpaste, in the form of a cylinder. An access door is provided, allowing the user to extract the toothpaste and to activate a revolving holder for a toothbrush. A sand clock is also provided at the top of the cylinder. The sand clock can be flipped thanks to a gearing forming part of the above revolving mechanism.

DE 89 12 514 U1 describes a base station comprising receptacle holes for a toothbrush and a tube of toothpaste, as well as a glass and a sand clock timer. No press-fitted lids nor any compact structure is described.

In the current state of the art we are not aware of any containers permitting small sized objects to be housed inside, such as tube of toothpaste or toothbrush, or others that are unrelated to dental hygiene, and which, as well as providing a space for the corresponding objects, also include a timer as does the container of the present invention.

Moreover, it is known that in many circumstances water is a scarce good that must be properly economized on, yet it is very often wasted unnecessarily when brushing one's teeth due to the tap being left to run without any need for this while the brushing operation is being carried out.

It is furthermore known that brushing the teeth is very often done defectively, due to the insufficient length of time during which the brushing operation is carried out, as well as on account of the form of brushing.

In several regions of Spain, dental hygiene campaigns are being conducted in schools emphasizing two aspects:
- the length of time spent on brushing teeth should be no less than 2 minutes; and
- in this operation, no more water should be used than that corresponding to a glass-full.

We are not aware in the current state of the art of any specific method for facilitating compliance with the above two points, as is done by the method of the present invention.

### DESCRIPTION OF THE INVENTION

In order to achieve the objectives and avoid the drawbacks stated above, the invention consists of a container comprising a timer, the container being defined by the annexed independent claim 1. Preferred embodiments are defined in annexed dependent claims 2-5.

Moreover, independent claim 6 defines a method of use of the inventive container, the method comprising:
- A first step in which the toothbrush and the tube of toothpaste are removed from the container.
- A second step in which the container is filled with water up to the indicated level.
- A third step in which the toothpaste is dispensed on the toothbrush, the timer provided in the container is then started and the user brushes his/her teeth for the length of time established by that timer.
- A fourth step in which the mouth is rinsed and the brush is cleaned with the water contained in the container that was provided in the second step above.
- A fifth step in which the brush and the tube are placed back in the container.

In the preferred embodiment of this method, the first step includes separation of a lid and a glass making up the container, with the glass being filled with water in the second step; while the starting of the timer referred to in the third step consists of placing the lid in such a way that a sandglass provided therein starts to run.

With the configuration that has been described, the inventive container presents advantages such as providing a container endowed with a timer for the use that is wished, thereby resolving a gap existing in the state of the art, furthermore displaying an embodiment of notable simplicity and efficacy, and also providing a method of use that is applicable to dental hygiene which facilitates a correct brushing and a notable saving in water. The container of the invention also has a constructional simplicity that is very notable in its preferred embodiment, which permits certain low costs of marketing, furthermore presenting a very attractive esthetic appearance that makes it especially suitable for the education of children when it comes to dental hygiene.

Below, in order to facilitate a better understanding of this descriptive specification and forming an integral part thereof, some figures are attached in which the object of the invention has been represented by way of illustration and non-limiting.

### BRIEF DESCRIPTION OF THE FIGURES

**Figure 1****.-** Represents a perspective view of a container intended for dental hygiene and other uses, embodied according to the present invention and with all its components mounted.
**Figure 2****.-** Represents an exploded perspective view of the container referred to in the above figure 1, showing all its components separated.
**Figure 3****.-** Schematically represents a method of use of the container of the above figures, according to the present invention.

### DESCRIPTION OF AN EXAMPLE OF EMBODIMENT OF THE INVENTION

Given below is a description of an example of the invention making reference to the numbering adopted in the figures.

So, the container, intended for dental hygiene and other uses, of the example of embodiment, comprises a timer 3 mounted removably on the corresponding container, though in other embodiments of the invention said timer could be provided fixed or permanently.

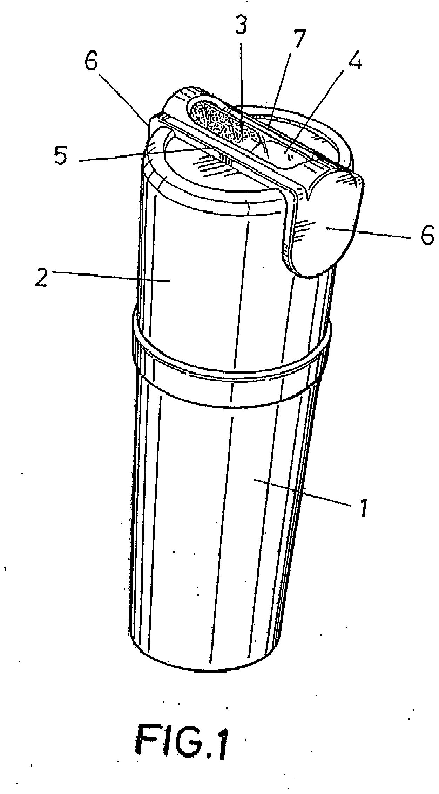

The container consists of a glass 1 and a lid 2 that can be connected together, while the timer consists of a sandglass 3, as can be seen in figure 1.

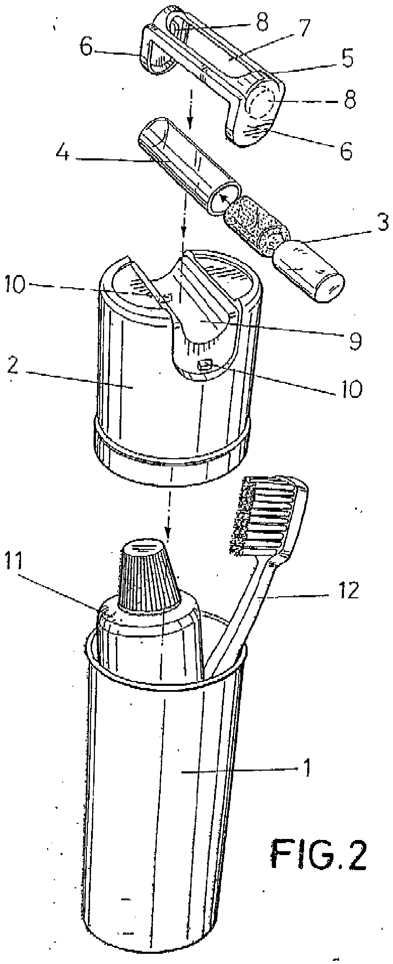

The container can house a tube of toothpaste 11 and a toothbrush 12, as can be seen in figure 2, wherein can also been seen the five pieces defining the container in the present example of the invention, and which are described below.

So, the glass 1 is a glass with an approximate capacity of 230 milliliters, while the lid 2 closes under pressure on the said glass 1, whose height together with that of the glass 1 permits housing of tube of toothpaste 11 and toothbrush 12, as illustrated in figure 2.

Another piece of the container consists of a timer support 5 which is secured by pressure on the lid 2 and includes two flat surfaces or seating platforms 6 that are diametrically opposite with respect to the lid 2 in order to provide two inverse positions for seating of the support 5 - lid 2 assembly.

Another piece, which can be seen in figure 2, is a timer defined by a sandglass 3 calibrated at approximately 2.5 minutes, which is secured in the support 5 allowing a dual positioning in the vertical necessary for its use.

Finally, the fifth piece of the container of the present example is a protector 4 for the clock 3, consisting of a transparent tube perimetrically surrounding it.

In the present embodiment, the lid 2 presents in its upper end a diametric groove 9 extending towards the sides and presenting in the corresponding extensions some receiving recesses 10, as can be seen in figure 2. These receiving recesses 10 have the aim of housing and securing the support 5 of the timer 3.

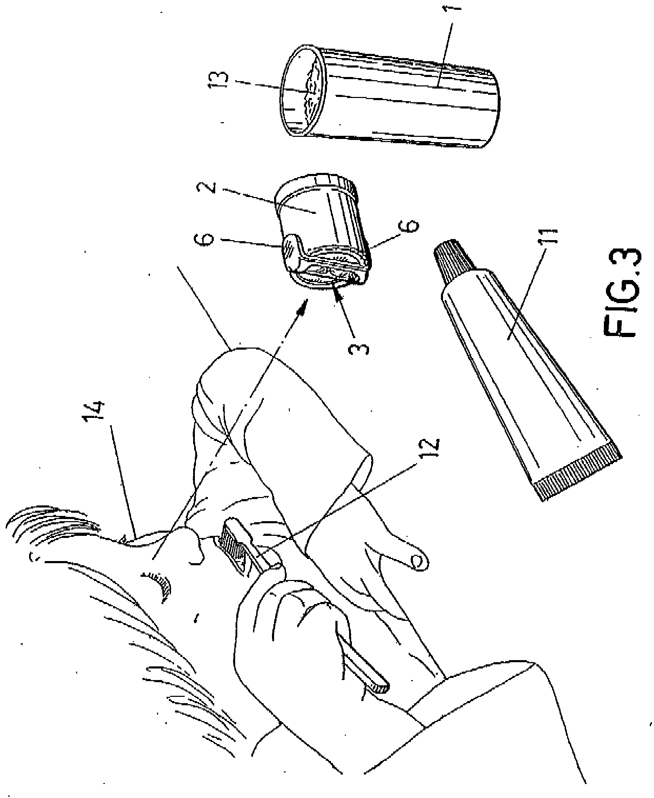

Moreover, the support 5 of this example of embodiment presents its platforms 6 that can be received in those recesses 10 referred to above, and which are internally provided with some studs 8 which are going to allow the securing of the ends of the protector 4 and with it the timer 3, all of which can be seen in figure 3.

The zone of the support 5 that interconnects the seating platforms 6 includes an opening or window 7 for viewing the clock 3.

Provision has been made so that in other embodiments of the invention the said timer consists of a digital clock, an audio recording, preferably with a message referring to dental hygiene, or others.

The embodiment that has been described, along with other possible ones, of the container of the invention can be used (as well as for other purposes) in the method of use of this invention, which includes some steps that are generically and schematically reflected in figure 3, and which consist of:
- A first step in which the toothbrush 12 and the tube of toothpaste 11 are removed from the container.
- A second step in which the container is filled with water 13 up to the indicated level.
- A third step in which the toothpaste is dispensed on the toothbrush, the timer 3 provided in the container is then started and the user 14 brushes his/her teeth for the length of time established by that timer; this particular situation of step three being shown in the said figure 3
- A fourth step in which the mouth is rinsed and the brush is cleaned with the water 13 contained in the container that was provided in the second step above.
- A fifth step in which the brush 12 and the tube 11 are placed back in the container.

According to the present embodiment, the first step includes separation of a lid 2 and a glass 1 making up the container, with the glass 1 being filled with water 13 in the second step; while the starting of the timer referred to in the third step consists of placing the lid in such a way that a sandglass 3 provided therein starts to run. Nevertheless, that described in this paragraph could be varied for other embodiments of the container shown in this section.

Likewise, the construction materials, color and finish of the container can be variable and adapted to the different designs or to the technical and commercial experience that would be gathered. Obviously, the dimensions and shape of the container, along with the characteristics of the timer, will be able to be varied in accordance with the use that is sought.

## Claims

1. Portable container for housing dental hygiene elements therein, comprising:
- a glass (1) of about 230 milliliters of filling capacity, incorporating a level for indicating its filling capacity;
- a lid (2) with means for closing under pressure on the glass (1); and
- a timer (3) mounted in the lid (2);
said glass (1) having a height permitting housing a tube of toothpaste (11) and a toothbrush (12) in its interior when the glass (1) is closed with the lid (2); and
wherein the lid (2) further comprises:
- a timer support (5) which is secured by pressure on the lid (2) and includes two flat surfaces or seating platforms (6) that are diametrically opposite with respect to the lid (2) allowing two opposite positions for laying the timer support (5) and lid (2) assembly; and
- a protector (4) consisting of a transparent tube perimetrically surrounding the timer (3).

2. Portable container according to claim 1, wherein the timer (3) consists of a sandglass, calibrated at approximately two and a half minutes.

3. Portable container according to claim 2, wherein the lid (2) presents in its upper end a diametric groove (9) extending towards the sides, presenting in the corresponding extensions receiving recesses (10) for housing and securing the timer support (5); and wherein said timer support (5) presents seating platforms (6) that can be received in the receiving recesses (10) and which are internally provided with studs (8) allowing securing the ends of the protector (4), the zone of the timer support (5) that interconnects its seating platforms (6) presenting an opening or window (7) that permits the sandglass to be viewed.

4. Portable container according to claim 1, wherein said timer (3) consists of a digital clock.

5. Portable container according to claim 1, wherein said timer (3) consists of an audio recording.

6. Method of using the portable container as claimed in any one of claims 1 to 5, comprising:
- a first step in which the toothbrush (12) and the tube of toothpaste (11) located inside the container are removed from the container,
- a second step in which the container is filled with water (13) up to the indicated level;
- a third step in which toothpaste is dispensed on the toothbrush (12), the timer (3) provided in the container is then started and the user (14) brushes his/her teeth for a length of time established by the timer (3);
- a fourth step in which the user's mouth is rinsed and the toothbrush (12) is cleaned with the water (13) contained in the container that was provided in the second step; and
- a fifth step in which the toothbrush (12) and the tube of toothpaste (11) are placed back in the container.

7. Method according to claim 6, wherein the starting of the timer (3) in the third step consists of placing the lid (2) in such a way that the timer (3) starts to run.

## Patentansprüche

1. Tragbarer Behälter zur Aufnahme von Zahnhygieneelementen, mit:
- einem Glas (1) von ungefähr 230 Millimeter Füllstand mit einem Pegel zur Anzeige seines Füllstands;
- einem Deckel (2) auf dem Glas (1) mit Mitteln zum Schließen unter Druck; und
- einem Zeitgeber (3), der in dem Deckel (2) vorgesehen ist;
wobei das Glas (1) eine Höhe hat, die die Aufnahme einer Zahnpastatube (11) und einer Zahnbürste (12) im Inneren ermöglicht, wenn das Glas (1) mit dem Deckel (2) geschlossen ist; und
wobei der Deckel (2) ferner aufweist:
- eine Zeitgeberhalterung (5), die mit Druck auf dem Deckel (2) befestigt ist und zwei flache Oberflächen oder Auflageplattformen (6) aufweist, die in Bezug auf den Deckel (2) entgegengesetzt zueinander liegen, so dass sich zwei gegenüberliegende Positionen ergeben, die zum Auflegen der Anordnung aus Zeitgeberhalterung (5) und Deckel (2) geeignet sind; und
- einem Schutzelement (4), das ein durchsichtiges Rohr, das den Zeitgeber (3) umfangsmäßig umgibt, aufweist.

2. Tragbarer Behälter nach Anspruch 1, wobei der Zeitgeber (3) eine Sanduhr aufweist, die auf ungefähr zweieinhalb Minuten geeicht ist.

3. Tragbarer Behälter nach Anspruch 2, wobei der Deckel (2) in seinem unteren Ende eine diametrische Nut (9), die zu den Seiten verläuft, aufweist, die in den entsprechenden Erstreckungen Aufnahmevertiefungen (20) zur Aufnahme und zur Befestigung der Zeitgeberhalterung (5) bilden; und wobei die Zeitgeberhalterung (5) Auflageplattformen (6) hat, die in den Aufnahmevertiefungen (10) aufgenommen werden können und die intern mit Stiften (8) versehen sind, die eine Befestigung der Enden des Schutzelements (4) ermöglichen, wobei der Bereich der Zeitgeberhalterung (5), der mit den Aufnahmeplattformen (6) in Verbindung steht, eine Öffnung oder ein Fenster (7) hat, das eine Betrachtung der Sanduhr ermöglicht.

4. Tragbarer Behälter nach Anspruch 1, wobei der Zeitgeber (3) eine Digitaluhr aufweist.

5. Tragbarer Behälter nach Anspruch 1, wobei der Zeitgeber (3) eine Audio-Aufzeichnung aufweist.

6. Verfahren zur Verwendung des tragbaren Behälters nach einem der Ansprüche 1 bis 5, mit:
- einem ersten Schritt, in welchem die Zahnbürste (12) und die Zahnpastatube (11), die im Inneren des Behälters angeordnet sind, aus dem Behälter entfernt werden,
- einem zweiten Schritt, in welchem der Behälter mit Wasser (13) bis zu dem angezeigten Füllstand gefüllt wird;
- einem dritten Schritt, in welchem Zahnpasta auf die Zahnbürste (12) verteilt wird, der Zeitgeber (3), der in dem Behälter vorgesehen ist, anschließend gestartet wird, und der Benutzer (14) seine Zähne entsprechend einer Zeitdauer putzt, die durch den Zeitgeber (3) vorgegeben wird;
- einem vierten Schritt, in welchem der Mund des Benutzers gespült und die Zahnbürste (12) mit dem Wasser (13), das in dem Behälter enthalten ist, das in dem zweiten Schritt bereitgestellt wurde, gereinigt wird; und
- einem fünften Schritt, in welchem die Zahnbürste (12) und die Zahnpastatube (11) zurück in den Behälter gestellt werden.

7. Verfahren nach Anspruch 6, wobei das Starten des Zeitgebers (3) im dritten Schritt darin besteht, dass der Deckel (2) derart angeordnet wird, dass der Zeitgeber (3) anfängt zu laufen.

## Revendications

1. Récipient portatif pour contenir des éléments d'hygiène dentaire à l'intérieur, comprenant :
- un verre (1) d'environ 230 millilitres de capacité de remplissage, incorporant un niveau pour indiquer sa capacité de remplissage ;
- un couvercle (2) avec des moyens pour la fermeture sous pression sur le verre (1) ; et
- un dispositif de mesure du temps (3) monté dans le couvercle (2) ;
ledit verre (1) ayant une hauteur permettant de contenir un tube de pâte dentifrice (11) et une brosse à dents (12) dans son intérieur quand le verre (1) est fermé avec le couvercle (2) ; et
où le couvercle (2) comprend en outre :
- un support de dispositif de mesure du temps (5) qui est fixé par pression sur le couvercle (2) et inclut deux surfaces plates ou plateformes d'appui (6) qui sont diamétralement opposées par rapport au couvercle (2) en permettant deux positions opposées pour poser l'ensemble du support de dispositif de mesure du temps (5) et du couvercle (2) ; et
- un élément protecteur (4) consistant en un tube transparent entourant le dispositif de mesure du temps (3) suivant le périmètre.

2. Récipient portatif selon la revendication 1, où le dispositif de mesure du temps (3) consiste en un sablier, étalonné à approximativement deux minutes et demie.

3. Récipient portatif selon la revendication 2, où le couvercle (2) présente dans son extrémité supérieure une rainure diamétrale (9) qui s'étend en direction des côtés, présentant dans les extensions correspondantes des évidements de réception (10) pour contenir et fixer le support de dispositif de mesure du temps (5) ; et où ledit support de dispositif de mesure du temps (5) présente des plateformes d'appui (6) qui peuvent être reçues dans les évidements de réception (10) et qui sont munies à l'intérieur de tenons (8) permettant de fixer les extrémités de l'élément protecteur (4), la zone du support de dispositif de mesure du temps (5) qui relie entre elles ses plateformes d'appui (6) présentant une ouverture ou fenêtre (7) qui permet au sablier d'être vu.

4. Récipient portatif selon la revendication 1, où ledit dispositif de mesure du temps (3) consiste en une horloge numérique.

5. Récipient portatif selon la revendication 1, où ledit dispositif de mesure du temps (3) consiste en un enregistrement audio.

6. Procédé d'utilisation du récipient portatif selon l'une quelconque des revendications 1 à 5, comprenant :
- une première étape dans laquelle la brosse à dents (12) et le tube de pâte dentifrice (11) situés à l'intérieur du récipient sont retirés du récipient,
- une seconde étape dans laquelle le récipient est rempli d'eau (13) jusqu'au niveau indiqué ;
- une troisième étape dans laquelle de la pâte dentifrice est distribuée sur la brosse à dents (12), le dispositif de mesure du temps (3) prévu dans le récipient est ensuite déclenché et l'utilisateur (14) brosse ses dents pendant une durée établie par le dispositif de mesure du temps (3) ;
- une quatrième étape dans laquelle la bouche de l'utilisateur est rincée et la brosse à dents (12) est nettoyée avec l'eau (13) contenue dans le récipient qui a été fournie dans la seconde étape ; et
- une cinquième étape dans laquelle la brosse à dents (12) et le tube de pâte dentifrice (11) sont placés de nouveau dans le récipient.

7. Procédé selon la revendication 6, où le déclenchement du dispositif de mesure du temps (3) dans la troisième étape consiste à placer le couvercle (2) de telle manière que le dispositif de mesure du temps (3) commence à fonctionner.
